# EUROPÄISCHE PATENTSCHRIFT

(11) **EP 0 591 246 B1**
(45) Veröffentlichungstag und Bekanntmachung des Hinweises auf die Patenterteilung: **15.02.1995**
(21) Anmeldenummer: 92910834.8
(22) Anmeldetag: 02.06.1992
(51) Int. Cl.: B60T 8/48, B60T 8/50

(54) **HYDRAULISCHE BREMSANLAGE MIT BLOCKIERSCHUTZ- UND/ODER ANTRIEBSSCHLUPFREGELEINRICHTUNG, INSBESONDERE FÜR KRAFTFAHRZEUGE**
HYDRAULIC BRAKE SYSTEM WITH ANTI-LOCK AND DRIVE SLIP CONTROL DEVICE, ESPECIALLY FOR MOTOR VEHICLES
DISPOSITIF DE FREINAGE HYDRAULIQUE AVEC SYSTEME D'ANTIBLOCAGE ET/OU D'ANTIPATINAGE A L'ACCELERATION, EN PARTICULIER POUR VEHICULES AUTOMOBILES

(30) Priorität: 29.06.1991 DE 4121601
(43) Veröffentlichungstag der Anmeldung: 13.04.1994
(73) Patentinhaber: ROBERT BOSCH GMBH, 70442 Stuttgart (DE)
(72) Erfinder: BERNHARDT, Wolfgang, D-7015 Korntal (DE); PUESCHEL, Helmut, D-7146 Tamm (DE); SCHMIDT, Guenther, D-7146 Tamm-Hohenstange (DE)
(86) Internationale Anmeldenummer: DE9200444
(87) Internationale Veröffentlichungsnummer: WO9300240

(56) Entgegenhaltungen:
- EP-A- 0 332 399
- WO-A-92/05991
- FR-A- 2 653 400
- US-A- 3 866 983
- US-A- 4 099 793

## Beschreibung

### Stand der Technik

Die Erfindung geht aus von einer hydraulischen Bremsanlage mit Blockierschutz- und/oder Antriebsschlupfregeleinrichtung, insbesondere für Kraftfahrzeuge, nach der Gattung des Hauptanspruchs.

Es ist schon eine derartige hydraulische Mehrkreis-Bremsanlage vorgeschlagen worden (DE-Patentanmeldung P 41 07 978.7), bei der Antriebsschlupfregelbetrieb in einem der angetriebenen Hinterachse des Fahrzeugs zugeordneten Bremskreis wirksam werden kann, während Blockierschutzregelbetrieb sowohl in einem der Vorderachse des Fahrzeugs zugeordneten Bremskreis als auch im Hinterachs-Bremskreis möglich ist. Beide Bremskreise sind mit den einzelnen Radbremsen zugeordneten Ventilanordnungen ausgestattet, deren als 2/2 -Wegeventil ausgebildetes Einlaßventil in der jeweiligen Bremsleitung angeordnet ist, die zwischen einem Hauptbremszylinder und der zugeordneten Radbremse verläuft. Diese Einlaßventile haben einen Durchlaßquerschnitt, der naturgemäß begrenzt, jedoch nicht als ausgeprägte Drosselstelle ausgebildet ist. In von den Ventilanordnungen bei Blockierschutz- oder Antriebsschlupfregelbetrieb geschalteten Phasen für Bremsdruckaufbau in den Radbremsen ist daher eine hohe Druckanstiegsgeschwindigkeit wirksam, die beim Schalten der Einlaßventile eine intensive Geräuschentwicklung und deutlich spürbare Pedalvibrationen zur Folge hat. Hierdurch ist der Komfort der Bremsanlage bzw. des Fahrzeugs gemindert.

Eine aus FR-A-2 653 400 gemäß dem Oberbegriff des Anspruchs 1, bekannte hydraulische Bremsanlage mit Blockierschutzeinrichtung besitzt pedalbetätigbare Umschaltventile zwischen einer Druckmittelquelle und dem jeweiligen Bremskreis. In einer zu einer Radbremse führenden Bremsleitung ist eine von einem Steuergerät elektromagnetisch schaltbare Ventilanordnung für die Bremsdruckmodulation in der Radbremse vorgesehen. Die Ventilanordnung besteht aus einem Auslaßventil für der Radbremse im Blockierschutzbetrieb entnommenes Druckmittel sowie einem Einlaßventil für die Druckeinsteuerung in die Radbremse. Das Einlaßventil ist als ein 2/2-Wegeventil mit federbetätigter Durchlaßstellung als Grundstellung ausgebildet. Das Einlaßventil ist von einer Bypassleitung umgangen, in der sich eine Drosselstelle und ein Rückschlagventil befinden. In der Grundstellung des Einlaßventils ist somit ein ungedrosselter Druckaufbau in der Radbremse gegeben, in der Sperrstellung des Einlaßventils dagegen ein gedrosselter.

In EP-A-0 332 399 ist eine hydraulische Bremsanlage mit einer Blockierschutzeinrichtung und einem Einlaßventil in einer Bremsleitung mit parallel zum Einlaßventil angeordneter Drossel beschrieben. Diese ist dazu vorgesehen, bei gesperrtem Einlaßventil in Druckabbauphasen einer Radbremse entnommenes Druckmittel mittels einer Pumpe zum Teil zurück zur Radbremse und zu einem Hauptbremszylinder zu fördern.

### Vorteile der Erfindung

Die erfindungsgemäße hydraulische Bremsanlage mit den kennzeichnenden Merkmalen des Hauptanspruchs hat demgegenüber den Vorteil, daß in Druckaufbauphasen des Blockierschutz- oder Antriebsschlupfregelbetriebs eine erhebliche Geräuschreduzierung sowie verminderte Pedalrückwirkung erzielt wird, weil die Drosselstelle eine deutliche Verringerung der Druckanstiegsgeschwindigkeit bewirkt. Damit ist eine Verbesserung des Komforts der Bremsanlage erreicht.

Im Unteranspruch 2 ist eine zweckmäßige Bauform für das Absperrventil angegeben.

### Zeichnung

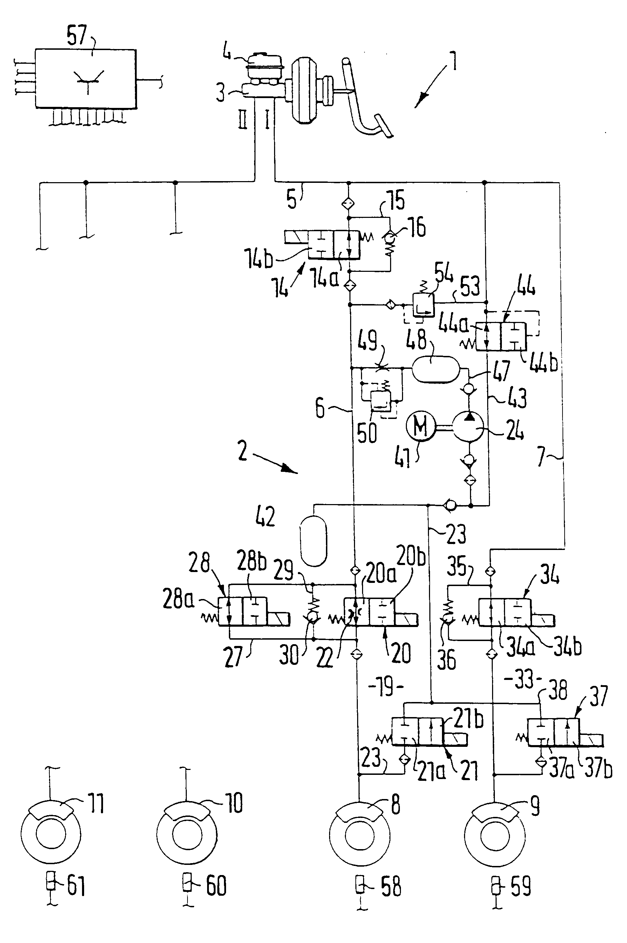

Ein Ausführungsbeispiel der Erfindung ist in der nachfolgenden Beschreibung anhand eines in der Zeichnung dargestellten Schaltbildes einer hydraulischen Mehrkreis-Bremsanlage für Kraftfahrzeuge näher erläutert.

### Beschreibung des Ausführungsbeispiels

Die in der Zeichnung dargestellte, hydraulische Bremsanlage 1 ist zur Verwendung in Kraftfahrzeugen, insbesondere Personenkraftwagen, bestimmt. Die Bremsanlage 1 ist mit einer Blockierschutz- und Antriebsschlupfregeleinrichtung 2 ausgestattet.

Die Bremsanlage 1 hat einen pedalbetätigbaren, zweikreisigen Hauptbremszylinder 3 mit einem Druckmittel-Vorratsbehälter 4. Ein erster Bremskreis I der Bremsanlage 1 weist eine Bremsleitung 5 auf, welche in Bremsleitungen 6 und 7 verzweigt ist. Die Bremsleitung 6 führt zu einer Radbremse 8 eines angetriebenen, nicht dargestellten Vorderrades des Fahrzeugs. Die Bremsleitung 7 steht mit einer Radbremse 9 eines nicht angetriebenen, ebenfalls nicht dargestellten Hinterrades des Fahrzeuges in Verbindung. Die Bremsanlage 1 weist daher die sogenannte K-Aufteilung der Bremskreise auf, d. h. dem Bremskreis I sind beispielsweise das linke Vorderrad und das rechte Hinterrad des Fahrzeuges zugeordnet, während an einen Bremskreis II der Bremsanlage eine Radbremse 10 des angetriebenen, rechten Vorderrades und eine Radbremse 11 des nicht angetriebenen linken Hinterrades des Fahrzeugs angeschlossen sind. Da die beiden Bremskreise I und II jeweils bezüglich der Bremsbetätigung der Vorderradbremsen 8 bzw. 10 sowie der Hinterradbremsen 9 bzw. 11 einen identischen Aufbau haben, ist lediglich der Bremskreis I in der Zeichnung dargestellt und nachfolgend ausführlich beschrieben.

Der Bremskreis I weist hauptbremszylinderseitig nach dem Abzweig der Bremsleitung 7 von der Bremsleitung 5 ein in der Bremsleitung 6 angeordnetes erstes Absperrventil 14 auf. Dieses ist als 2/2-Wegeventil mit federbetätigter Durchlaßstellung 14a sowie elektromagnetisch schaltbarer Sperrstellung 14b ausgebildet. Das Absperrventil 14 ist durch eine erste Bypassleitung 15 mit einem Rückschlagventil 16 umgangen, welches eine Durchlaßrichtung vom Hauptbremszylinder 3 zur Radbremse 8 hat.

Der Radbremse 8 ist eine Ventilanordnung 19 für die Bremsdruckmodulation zugeordnet. Die Ventilanordnung 19 weist ein in der Bremsleitung 6 liegendes Einlaßventil 20 und ein Auslaßventil 21 auf. Beide Ventile 20, 21 sind als 2/2-Wegeventil ausgebildet. Das Einlaßventil 20 weist eine federbetätigte Durchlaßstellung 20a auf, in der eine Drosselstelle 22 wirksam ist. In einer elektromagnetisch schaltbaren Sperrstellung 20b ist die Bremsleitung 6 unterbrochen. Das Auslaßventil 21 befindet sich in einer Rückführleitung 23 für Druckmittel, welche zwischen dem Einlaßventil 20 und der Radbremse 8 von der Bremsleitung 6 ausgeht und zur Saugseite einer selbstansaugend ausgebildeten Hochdruckpumpe 24 führt. Das Auslaßventil 21 hat eine federbetätigte Sperrstellung 21a und eine elektromagnetisch schaltbare Durchlaßstellung 21b.

Das Einlaßventil 20 mit Drosselstelle 22 der Ventilanordnung 19 ist durch eine zweite Bypassleitung 27 umgangen. In der Bypassleitung 27 befindet sich ein zweites Absperrventil 28 in Form eines 2/2-Wegeventils. Das zweite Absperrventil 28 hat eine federbetätigte Durchlaßstellung 28a und eine elektromagnetisch schaltbare Sperrstellung 28b. Parallel zum Einlaßventil 20 der Ventilanordnung 19 verläuft noch eine dritte Bypassleitung 29 mit einem Rückschlagventil 30, welches eine Durchlaßrichtung von der Radbremse 8 zum Hauptbremszylinder 3 hat.

Der Radbremse 9 ist ebenfalls eine Ventilanordnung 33 für die Bremsdruckmodulation zugeordnet. Diese weist ein in der Radbremse 7 liegendes Einlaßventil 34 auf, welches als 2/2-Wegeventil ausgebildet und eine federbetätigte Durchlaßstellung 34a sowie eine elektromagnetisch schaltbare Sperrstellung 34b aufweist. Parallel zum Einlaßventil 34 verläuft eine Bypassleitung 35 mit einem von der Radbremse 9 zum Hauptbremszylinder 3 öffnenden Rückschlagventil 36. Ein Auslaßventil 37 der Ventilanordnung 33 liegt in einer zwischen dem Einlaßventil 34 und der Radbremse 9 von der Bremsleitung 7 ausgehenden Rückführleitung 38, welche zwischen dem Auslaßventil 21 der Ventilanordnung 19 und der Hochdruckpumpe 24 in die Rückführleitung 23 mündet. Das Auslaßventil 37 ist als 2/2-Wegeventil ausgebildet. Es besitzt eine federbetätigte Sperrstellung 37a und eine elektromagnetisch schaltbare Durchlaßstellung 37b.

An die Rückführleitung 23 ist zwischen den Ventilanordnungen 19, 33 und der durch einen elektrischen Antriebsmotor 41 antreibbaren Hochdruckpumpe 24 eine Druckmittel-Speicherkammer 42 angeschlossen. Zwischen dieser Speicherkammer 42 und der Hochdruckpumpe 24 steht die Rückführleitung 23 mit einer Ansaugleitung 43 in Verbindung, welche hauptbremszylinderseitig von der Bremsleitung 7 ausgeht. In der Ansaugleitung 43 ist ein drittes Absperrventil 44 in Form eines 2/2-Wegeventils angeordnet. Das dritte Absperrventil 44 hat eine federbetätigte Durchlaßstellung 44a und eine vom hauptbremszylinderseitigen Druck in der Ansaugleitung 43 schaltbare Sperrstellung 44b.

Von der Druckseite der Hochdruckpumpe 24 geht eine Einspeiseleitung 47 aus, in der eine Dampferkammer 48 sowie eine Drosselstelle 49 mit parallelgeschaltetem Druckbegrenzungsventil 50 liegen. Die Einspeiseleitung 47 mündet zwischen dem ersten Absperrventil 14 und der Ventilanordnung 19 in die Bremsleitung 6.

Außerdem ist noch eine Überströmleitung 53 vorgesehen, welche von der Bremsleitung 6 zwischen dem ersten Absperrventil 14 und dem Anschluß der Einspeiseleitung 47 ausgeht und zwischen dem Hauptbremszylinder 3 und dem dritten Absperrventil 44 an die Ansaugleitung 43 angeschlossen ist. In der Überströmleitung 53 befindet sich ein Druckbegrenzungsventil 54 mit Absteuerrichtung von der Bremsleitung 6 zur Ansaugleitung 43.

Zu der Blockierschutz- und Antriebsschlupfregeleinrichtung 2 der Bremsanlage 1 gehören noch ein elektronisches Steuergerät 57 sowie den einzelnen Fahrzeugrädern zugeordnete Drehzahlsensoren 58 - 61. Die das Drehverhalten der Fahrzeugräder erfassenden Drehzahlsensoren 58 - 61 übermitteln Signale an das Steuergerät 57, welches diese auswertet und in Schaltsignale für den Antriebsmotor 41 der Hochdruckpumpe 24 sowie der diversen elektromagnetisch betätigbaren Ventile der Bremsanlage 1 umsetzt. Die Einrichtung 2 wird aktiviert, wenn beim Bremsen bei wenigstens einem Fahrzeugrad Blockiergefahr besteht oder beim Anfahren und Beschleunigen des Fahrzeugs wenigstens eines der Antriebsräder unzulässig großem Schlupf unterworfen ist.

Im einzelnen hat die Bremsanlage 1 folgende Funktionen:
Bei einer normalen, vom Fahrer des Fahrzeugs ausgelösten Bremsung nehmen die Ventile der Bremsanlage 1 ihre gezeichnete Stellung ein. Außerdem ist der Antriebsmotor 41 der Pumpe 24 nicht eingeschaltet. Bei einer solchen Bremsung werden durch Betätigen des Hauptbremszylinders 3 Druckmittelteilmengen in den Bremsleitungen 5, 6, 7 des Bremskreises I verschoben und Bremsdruck in den Radbremsen 8, 9 erzeugt. In gleicher Weise folgt die Erzeugung von Bremsdruck in den Radbremsen 10, 11 des Bremskreises II. Im Falle der Radbremse 8 (und auch in entsprechender Weise im Falle der Radbremse 10 des Bremskreises II) nimmt das Druckmittel seinen Weg durch die zweite Bypassleitung 27 und das zweite Absperrventil 28 unter Umgehung der Drosselstelle 22 im Einlaßventil 20.

Tritt bei einer solchen Bremsung beispielsweise am der Radbremse 8 zugeordneten linken Vorderrad Blockiergefahr auf, so wird dies vom Steuergerät 57 aufgrund der Signale der Drehzahlsensoren 58 - 61 erkannt. Zur Bremsdruckmodulation in der Radbremse 8 schaltet nun das Steuergerät 57 die Ventilanordnung 19 in Phasen von Druckabbau, Druckhalten und Druckaufbau in der Radbremse 8. In der Druckabbauphase werden das Einlaßventil 20 in die Sperrstellung 20b sowie das zweite Absperrventil 28 in die Sperrstellung 28b geschaltet. Das Steuergerät 57 schaltet das Auslaßventil 21 der Ventilanordnung 19 in die Durchlaßstellung 21b und setzt den Antriebsmotor 41 der Hochdruckpumpe 24 in Betrieb.

Aufgrund des vom Fahrer erzeugten Bremsdruckes nimmt das dritte Absperrventil 44 in der Ansaugleitung 43 seine Sperrstellung 44b ein. Aus der Radbremse 8 kann Druckmittel abströmen und von der Pumpe 24 zum Hauptbremszylinder 3 rückgefördert werden. In einer Phase für Druckhalten wird zusätzlich das Auslaßventil 21 in seine Sperrstellung 21a geschaltet. In einer Phase für Druckaufbau in der Radbremse 8 schaltet das Steuergerät 57 das Einlaßventil 20 in seine Durchlaßstellung 20a, während das Auslaßventil 21 seine Sperrstellung 21a sowie das zweite Absperrventil 28 seine Sperrstellung 28b beibehalten. Druckmittel kann nun vom Hauptbremszylinder 3 unter Überwindung der Drosselstelle 22 im Einlaßventil 20 mit verminderter Druckanstiegsgeschwindigkeit zur Radbremse 8 strömen.

Beim Auftreten von Antriebsschlupf am der Radbremse 8 zugeordneten Vorderrad schaltet das Steuergerät 57 das erste Absperrventil 14 in die Sperrstellung 14b und das zweite Absperrventil 28 in die Sperrstellung 28b. Außerdem wird der elektrische Antriebsmotor 41 der selbstansaugenden Hochdruckpumpe 24 eingeschaltet. Da der Hauptbremszylinder 3 unbetätigt ist, nimmt das dritte Absperrventil 44 seine Durchlaßstellung 44a ein, so daß die Pumpe 24 Druckmittel aus dem Hauptbremszylinder 3 bzw. dem Druckmittel-Vorratsbehälter 4 ansaugen kann. In der Phase für Bremsdruckaufbau in der Radbremse 8 nimmt das Auslaßventil 21 der Ventilanordnung 19 die gezeichnete Sperrstellung 21a ein. Das von der Pumpe 24 geförderte Druckmittel kann durch die Bremsleitung 6 unter Überwindung der Drosselstelle 22 des Einlaßventils 20 mit verringerter Druckanstiegsgeschwindigkeit zur Radbremse 8 strömen. In einer Phase für Druckhalten schaltet das Steuergerät 57 das Einlaßventil 20 in die Sperrstellung 20b. Von der Pumpe 24 weiterhin gefördertes Druckmittel kann durch die Überströmleitung 53 und das Druckbegrenzungsventil 54 zur Ansaugleitung 43 abströmen. In einer Phase für Druckabbau verbleiben die Ventile 14, 28 und 20 in ihrer Sperrstellung 14b bzw. 28b bzw. 20b, während das Auslaßventil 21 der Ventilanordnung 19 in die Durchlaßstellung 21b geschaltet wird.

Die Anordnung der Drosselstelle 22 mit parallelgeschaltetem zweiten Absperrventil 28 findet, wie beschrieben, zweckmäßigerweise Anwendung bei Vorderachsbremsen, weil dort relativ große Druckmittelmengen verschoben werden müssen. Die Anordnung kann aber auch bei Hinterachsbremsen benutzt werden. Sie ist selbstverständlich auch anwendbar bei Bremskreisaufteilungen, bei denen die Bremsen einer Achse an einen Bremskreis angeschlossen sind.

## Patentansprüche

1. Hydraulische Bremsanlage (1) mit Blockierschutz- und/oder Antriebsschlupfregeleinrichtung (2), insbesondere für Kraftfahrzeuge,
- mit einer zwischen einem pedalbetätigbaren Hauptbremszylinder (3) und wenigstens einer Radbremse (8) verlaufenden Bremsleitung (6),
- mit einer in Abhängigkeit vom Raddrehverhalten von einem Steuergerät (57) Phasen von Druckaufbau, Druckhalten und Druckabbau in der Radbremse (8) schaltenden Ventilanordnung (19) für die Bremsdruckmodulation mit einem in der Bremsleitung (6) angeordneten Einlaßventil (20) und einem Auslaßventil (21),
- mit einer dem Einlaßventil (20) zugeordneten Drosselstelle (22) und
- mit einer das Einlaßventil (20) umgehenden Bypassleitung (27),
gekennzeichnet durch die weiteren Merkmale:
- das Einlaßventil (20) weist die Drosselstelle (22) auf,
- in der Bypassleitung (27) befindet sich ein Absperrventil (28), welches vom Steuergerät (57) schaltbar ist
- das Absperrventil (28) nimmt in Phasen für Druckaufbau bei Blockierschutz- und/oder Antriebsschlupfregelbetrieb seine Sperrstellung (28b) ein.

2. Hydraulische Bremsanlage nach Anspruch 1, dadurch gekennzeichnet, daß das Absperrventil (28) als 2/2-Wegeventil mit federbetätigter Durchlaßstellung (28a) als Grundstellung ausgebildet ist.

## Claims

1. Hydraulic brake system (1) with anti-lock protection device and/or drive-slip control device (2), in particular for motor vehicles,
- having a brake conduit (6) extending between a pedal-actuated main brake cylinder (3) and at least one wheel brake (8),
- having a valve arrangement (19), for the brake pressure modulation, which has an inlet valve (20) arranged in the brake conduit (6) and an outlet valve (21) and which switches to pressure build-up, pressure retention and pressure reduction phases in the wheel brake (8) as a function of the wheel rotational behaviour of a control unit (57),
- having a throttle location (22) associated with the inlet valve (20) and
- having a bypass conduit (27) which bypasses the inlet valve (20),
characterized by the further features:
- the inlet valve (20) has the throttle location (22),
- a shut-off valve (28) which can be switched over by the control unit (57) is located in the bypass conduit (27),
- the shut-off valve (28) takes up its shut-off position (28b) in phases for pressure build-up in the case of anti-lock protection operation and/or drive-slip control operation.

2. Hydraulic brake system according to Claim 1, characterized in that the shut-off valve (28) is configured as a 2/2-way valve with spring-actuated passage position (28a) as the basic position.

## Revendications

1. Installation de freinage hydraulique (1) à système antiblocage et/ou antipatinage d'accélération, notamment pour des véhicules automobiles, comprenant :
- une conduite de frein (6) entre un maître-cylindre (3) commandé par pédale et au moins un frein de roue (8),
- un dispositif à soupapes (19) avec une soupape d'entrée (20) et une soupape de sortie (21) dans la conduite de frein (6), pour la modulation de la pression de freinage, en fonction du comportement en rotation des roues, dispositif commandé par un dispositif de commande (57) avec des phases de montée en pression, de maintien en pression et de diminution de pression dans le frein de roue (8),
- un point d'étranglement (22) associé à la soupape d'entrée (20),
- une conduite de dérivation (27) contournant la soupape d'entrée (20),
installation caractérisée en ce que :
- la soupape d'entrée (20) comprend un point d'étranglement (22),
- la conduite de dérivation (27) est équipée d'une soupape d'arrêt (28) commutée par le dispositif de commande (57),
- la soupape d'arrêt (28) passe en position de fermeture (28b) pour les phases de montée en pression lorsque le système antiblocage et/ou antipatinage est mis en oeuvre.

2. Installation de freinage hydraulique selon la revendication 1, caractérisé en ce que la soupape d'arrêt (28) est un distributeur à tiroir à 2/2 voies ayant une position passante (28a) commandée par ressort et constituant sa position de base.
